# EUROPEAN PATENT APPLICATION

(11) **EP 2 154 490 A1**
(43) Date of publication of application: **17.02.2010**
(21) Application number: 09166778.2
(22) Date of filing: 29.07.2009
(51) Int. Cl.: G01F 1/075, G01F 1/24, G01F 15/00, G01F 15/18, G01F 15/12

(54) **Plastic flow meter**

(30) Priority: 01.08.2008 IT TO20080612
(71) Applicant: ELTEK S.P.A., 15033 Casale Monferrato (IT)
(72) Inventor: Savini, Paolo, I-15030, Casale Popolo (AL) (IT)
(74) Representative: Dini, Roberto

(57) **Abstract**

The present invention relates to a detection device (1,1') for detecting at least one physical quantity of a fluid, of the type comprising at least one hollow plastic body (2,2') housing at least one detection means (3,3') of a sensor of said physical quantity, wherein the detection device (1,1') is provided with at least one inlet aperture and one outlet aperture for said fluid, and at least one metallic coupling element (6,6') to be coupled to at least one duct (C) afferent to the detection device (1,1'), and wherein the hollow plastic body (2,2') is associated with said metallic coupling element (6,6'), and wherein a tubular channel section is defined within said detection device (1,1') in which fluid flows between the inlet aperture and the outlet aperture, the detection means (3,3') being housed within said tubular channel section, the walls thereof being wholly made of plastic material.

The present invention also relates to a method for manufacturing said detection device (1,1'), comprising at least two of the following steps: - using a metallic element (6,6') for coupling the detection device (1,1') to an afferent duct (C), - manufacturing, by moulding or overmoulding a plastic material, at least one plastic tubular section (21,21') inside said metallic coupling element (6,6'), said plastic tubular section (21,21') being a part of a tubular channel in which the fluid measured by the detection device (1,1') flows, - manufacturing, by moulding or overmoulding a plastic material, at least one sealing profile or edge (22,22') at at least one free end section of at least one metallic coupling element (6,6').

## Description

The present invention relates to a flow meter, in particular according to at least the preamble of claim 1.

The term "flow meter" refers herein to any device used for measuring physical quantities of a fluid flow, e.g. for establishing whether or not there is a fluid flow and/or for measuring the rate and/or velocity of a fluid flow and/or for measuring or quantifying a quantity or volume of a flowing fluid.

It should be mentioned that, in general, many different types of flow meters are known in the art, which operate according to different principles and which are fitted with sensors adapted to measure at least one physical quantity of a fluid; such sensors typically comprise at least one detection means adapted to sense or recognise or measure or detect the quantity in question.

A first distinction can be made on the basis of the type of measurement carried out, thus dividing flow meters into static or displacement units: although both measure physical quantities of a fluid flow within a hollow body, displacement flow meters are equipped with detection means (adapted to detect at least one physical quantity of a fluid, such as velocity) which are movable as a function of the fluid flow, whereas static ones utilize detection means which do not move or whose flow-dependent movement is not used for measuring physical quantities of the fluid.

Displacement flow meters include, for example, units comprising a hollow body housing a detection means comprising a movable element which is set in motion under the action of the fluid flow, wherein such movement is detected, for example, by a transducer for measuring the desired quantity; depending on the type, the movable element may be an impeller (which turns when hit by the flow) or a slider (which moves linearly).

Static flow meters include, for example, the so-called hot-wire or hot-film flow meters, wherein the detection means is a heated resistor arranged within a hollow body, and fluid quantities are measured indirectly by measuring the resistor cooling rate, which is dependent on fluid flow; another example of a static flow meter is the so-called "vortex" flow meter, which measures the fluid flow in the hollow body by using Karman's law, according to which the frequency of the vortices created downstream of an element arranged in a hollow body and obstructing the fluid flow is proportional to flow velocity and hence to flow rate.

In the following description, reference will be made without distinction to all types of flow meters; in fact, the present invention is independent from the flow meter type and/or from the selected movable element.

As aforementioned, a flow meter typically comprises a hollow body which houses the detection means and which is installed in line in a branch of a hydraulic system; to such end, the hollow body has one inlet and one outlet, thus being in fluidic communication with corresponding inlet and outlet ducts belonging to the hydraulic system carrying the fluid flow for which one or more physical quantities are to be measured.

Aiming at lowering the cost of the flow meter without weakening the coupling points thereof connected to the inlet and outlet ducts, solutions have been conceived wherein a plastic body (which is light and cheap) is coupled to metallic parts (which provide the necessary strength): for example, Chinese patent CN 2757295Y describes a flow meter equipped with an impeller housed within a hollow plastic body in fluidic communication with two inlet and outlet ducts, afferent to the meter, in which the fluid flows; at each free end (adapted to be coupled to the inlet and outlet ducts), the plastic body is associated with a metal pipe section (partially "buried" in the plastic, the latter being moulded on the pipe section), which is threaded for being coupled to the inlet and outlet ducts afferent to the meter, e.g. by using a threaded ring nut.

However, the step of moulding the plastic body on the metal pipe (which is quite big in relation to the body itself) typically involves some coupling or adhesion problems, mainly caused by the different thermal shrinkage and/or expansion rates, resulting in the risk of undesired fluid leaks.

Furthermore, this flow meter also includes anti-rotation means adapted to prevent the metal pipe and plastic body from turning relative to each other, which means are provided in the form of a series of holes made in the metal pipe, into which the plastic material of the body seeps during the overmoulding process.

A further drawback of this solution is that the torque applied to these anti-rotation means when tightening the threaded metal pipe section is often considerable and may overcome the mechanical strength of said means, possibly leading to failure thereof: in fact, quite often the installer is not equipped with a tightening tool fitted with a torque meter (a so-called "torque wrench", which is relatively expensive and delicate), thus having the tendency to apply excessive torque when tightening the ring nut onto the threaded portion of the pipe section, typically resulting in failure at said anti-rotation means: as a matter of fact, the resistant section of the plastic body, which is subject to the mechanical stress caused by the tightening operation, de facto consists of the small plastic portions housed in the holes of the metal pipe section, thus leading to the risk of premature failure, especially harmful because it occurs close to the hydraulic sealing area, resulting in damage to both the anti-rotation means and the hydraulic duct.

In this respect, another drawback is that during the production process any small variations of the operating parameters of the moulding operation may cause the plastic to settle incorrectly into the holes of the pipe section.

Yet another drawback is that the different thermal shrinkage rates of plastic and metal may easily cause gaps or uncontrolled shrinkage in the holed area, thus weakening the structure where it is most stressed during the tightening operation, and possibly also creating a crack point.

More in general, it has been observed that these problems are common to all detection devices having a hollow plastic body wherein a fluid flows for which at least one physical quantity is to be measured (e.g. velocity, temperature, pressure, turbidity, conductivity or the like), whenever it is necessary to employ at least one metallic element for providing a connection to a duct afferent to the hollow body.

It is the object of the present invention to set up a detection device which can overcome these and other drawbacks; these and other objects are preferably achieved through a flow meter designed in accordance with the teachings of claim 1, which is an integral part of the present description, and/or manufactured by using a method in accordance with claim 15.

Further advantageous features will be set out in the appended claims, which are intended as an integral part of the present description.

A first idea at the basis of the present invention is to provide a detection device for detecting at least one physical quantity of a fluid, of the type comprising at least one hollow plastic body housing at least one detection means adapted to detect said physical quantity, wherein the detection device is provided with at least one inlet aperture and one outlet aperture for said fluid, and at least one metallic coupling element to be coupled to at least one duct afferent to the detection device, and wherein the hollow plastic body is associated with said metallic coupling element, and wherein a tubular channel section is defined within said detection device in which fluid flows between the inlet aperture and the outlet aperture, the detection means being housed within said tubular channel section, the walls thereof being wholly made of plastic.

In the present description and in the appended claims, the term "tubular channel" refers to a duct having at least one inlet aperture and one outlet aperture as well as peripheral walls delimiting the volume in which the fluid flows, said duct having in general any cross-section, which may vary along its extension between the inlet and outlet apertures.

A further, more specific idea at the basis of the present invention is to provide a detection device which is a flow or flow rate meter.

Preferably, said flow meter is a displacement flow switch or a turbine or impeller flow meter.

The present invention is also characterized by providing a flow meter comprising, as a metal coupling element, at least one metal coupling sleeve at least partly incorporated into or associated with the plastic body of the meter itself, wherein said plastic body also forms the tubular channel section inside the sleeve; preferably, said plastic body forms at least a portion of the sealing end of at least a portion of the tubular channel of the meter, in particular at the respective sleeve.

In the prior art, in fact, any fluid leaks in the tubular channel section defined by the flow meter were caused by an imperfect coupling between the metal (at the end sections) and the plastic body (in the body); according to the present invention, the tubular channel section in which the fluid flows in the flow meter has walls wholly made of plastic (and preferably in one piece), thus not being affected by possible defects in the coupling between the metallic and plastic parts.

According to the teachings of the present invention, any other tubular channel sections or branching tubular channels comprised in the meter may lack this feature, even though the perfect seal it ensures makes it preferable to design these tubular channel sections or tubular channels in the same way.

A further advantageous feature, which will be described later on, is that the metallic coupling element has a first and a second portions, preferably at least one of said portions being partly incorporated (e.g. by moulding) into the plastic material of the body, wherein the first portion is provided with means for coupling to a fluid inlet and/or outlet duct, and the second (engagement) portion is provided with anti-rotation means for preventing any mutual rotation between the metallic coupling element and the plastic body.

In accordance with the teachings of the present invention, the second portion of the metallic coupling element, which is incorporated into the body plastic, extends at least partly outwards and/or radially past the first portion; preferably, the second portion of the metallic coupling element comprises at least a portion having a radial dimension or diameter which is greater than the first portion of the metallic coupling element.

This implies that in this case the second portion or the anti-rotation means, which react by exerting a torque which is equal and opposite to the torque applied by the installer when tightening the ring nut, use a longer lever arm than in the prior art, resulting in a smaller and more evenly distributed reaction force, thus reducing the risk of failure in the most stressed points; in addition, as will be explained later on, any tension or stress in the plastic material of the anti-rotation means will not directly affect the plastic material of the hydraulic duct, since said parts are distant from each other.

Further advantageous features of the present invention are set out in the appended claims, which are intended as an integral part of the present description.

These features as well as further advantages of the present invention will become apparent from the following description of an embodiment thereof as shown in the annexed drawings, which are supplied by way of non-limiting example, wherein:
Fig. 1 is a top view of a first detection device for detecting physical quantities of a fluid, consisting of a flow meter according to the present invention;
Fig. 2 is a sectional view along the plane AA of the flow meter of Fig. 1 coupled to a duct afferent thereto;
Fig. 3 shows the meter of Fig. 2 uncoupled from the outer duct;
Fig. 4 is a perspective view of the flow meter of Fig. 1;
Fig. 5 is a partly exploded view of the meter of Fig. 4;
Fig. 6 shows an enlarged detail of the meter of Fig. 3;
Fig. 7 shows a variant of Fig. 6;
Figs. 8 and 9 show several perspective views of the threaded sleeve;
Fig. 10 is an exploded view of the flow meter of Fig. 3;
Fig. 11 is a side view of a second flow meter according to the present invention;
Fig. 12 is a perspective view of the flow meter of Fig. 11;
Fig. 13 is a sectional view along the plane AA of the flow meter of Fig. 11;
Fig. 14 is a front view of the flow meter of Fig. 11.

In the following description, reference will be made for simplicity to devices for detecting physical quantities of a fluid in the form of displacement flow meters; however, the present invention is generally applicable to any type of flow meter and/or flow switch, or more in general to any detection device adapted to detect at least one physical quantity of a fluid wherein a hollow plastic body is associated with a metallic element to be coupled to a duct afferent to the hollow body.

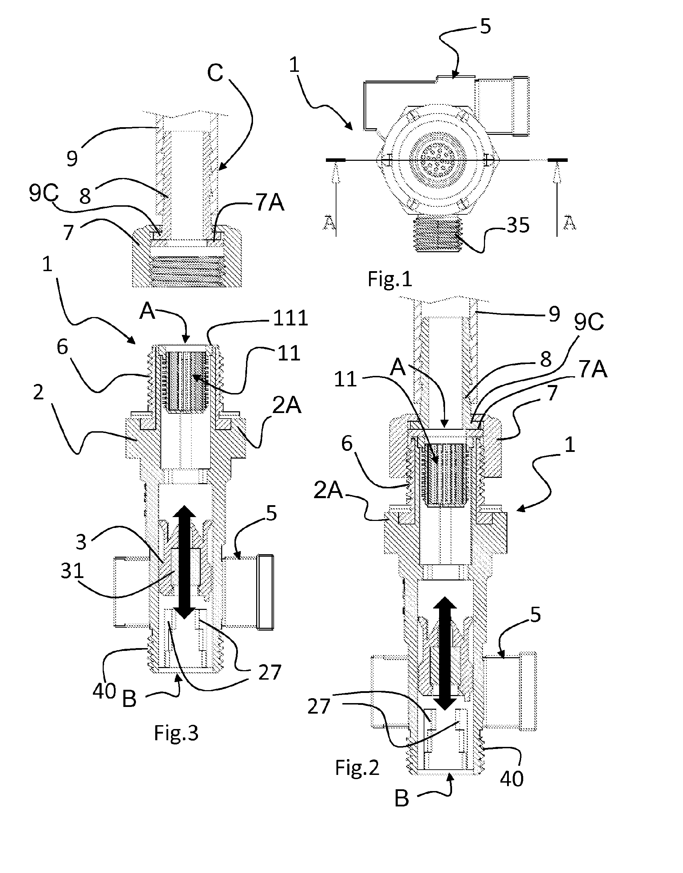

Referring now to Figs. 1 to 5, there is shown a flow meter or flow switch 1, in particular of the type equipped with a sensor comprising at least one detection means consisting of a slider-type movable element 3 and a transducer 5.

In general, of course, the sensor may also comprise additional components or be of a different type or provide different functions, as mentioned below, without departing from the scope and objects of the present invention; for example, the transducer may be replaced with a different device associated or cooperating with the detection means and adapted to detect and/or convert and/or transmit at least one datum corresponding to at least one physical quantity and/or variation of a physical quantity of the fluid being measured.

Flow meter or flow switch 1 according to the present invention comprises a hollow plastic body 2 with open ends, thus having a first aperture A and a second aperture B for a fluid flowing therethrough, which hollow body houses a slider 3 movable within body 2 and fitted with a magnet 31.

Apertures A and B may alternatively be either inlet or outlet apertures, according to the function of duct C afferent thereto, as will be clarified later on.

The displacement of slider 3 in the directions indicated by the double arrow is caused by the fluid flowing through flow meter 1 and/or by the force of gravity, and is detected by transducer 5 on the basis of the corresponding displacement of magnet 31, so as to measure physical quantities of the fluid flowing through meter 1 (fluid flow presence, fluid flow rate and/or fluid velocity); transducer 5 may, for example, be a Reed or a Hall effect transducer, which are per se known and will not be described any further; according to a variant not shown in the drawings, a resilient element, such as a spring preferably having predefined characteristics or a calibrated force, may also be provided for repositioning slider 3 when the flow stops or is reduced.

Between apertures A and B, flow meter 1 defines a tubular channel section which houses detection means 3 and in which the fluid flows.

In the illustrated example, flow meter 1 also comprises (at the inlet and/or outlet apertures) at least one metallic coupling element, which in this non-limiting example is a metal sleeve adapted to couple meter 1 to at least duct C afferent to flow meter 1; the duct C may be adapted to either supply or drain the fluid to/from the meter 1; in this example it comprises a ring nut 7, a fitting 8 and a pipe 9: in this case, the metallic coupling sleeve consists of a threaded metal sleeve 6 onto which the ring nut 7 is screwed.

Inside ring nut 7, an annular gasket 7A in contact with fitting 8 is adapted to be compressed frontally to ensure the necessary seal, as will be described in detail later on.

Of course, it is conceivable to omit fitting 8 and secure the ring nut directly to pipe 9, or to screw or mount pipe 9 directly onto metal sleeve 6; likewise, it is also conceivable to replace threaded metal sleeve 6 with another metallic element, e.g. for a bayonet or quick coupling (also known as "push-in fitting"), or even a spring-actuated ring nut or the like.

Another example of usable metallic coupling elements is a set of threaded metal sectors, each extending for at least a portion of the circumference surrounding the aperture facing duct C, said threaded sectors being partly buried or incorporated into, or anyway associated with, plastic body 2; likewise, it is also conceivable to use parts or elements of joint profiles surrounding, even only partially, the inlet or outlet aperture.

In any case, regardless of the type of metallic coupling element, according to the teachings provided herein flow meter 1 defines as a whole a tubular channel section with walls totally made of plastic material, unlike the prior art, where said walls were partly made of metal and partly made of plastic.

In other words, the inner surfaces of the walls touched by the fluid of the tubular channel section extending between the inlet aperture and the outlet aperture, and comprising the detection means of the flow meter, are entirely made of plastic.

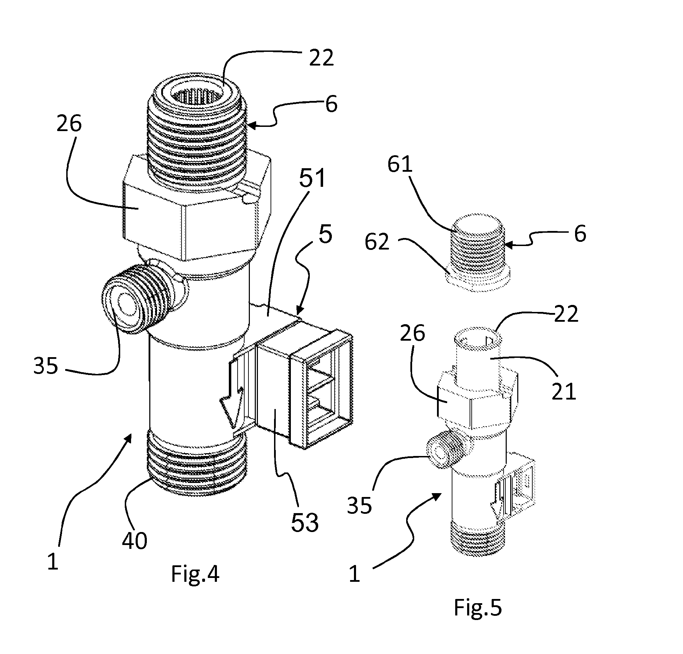

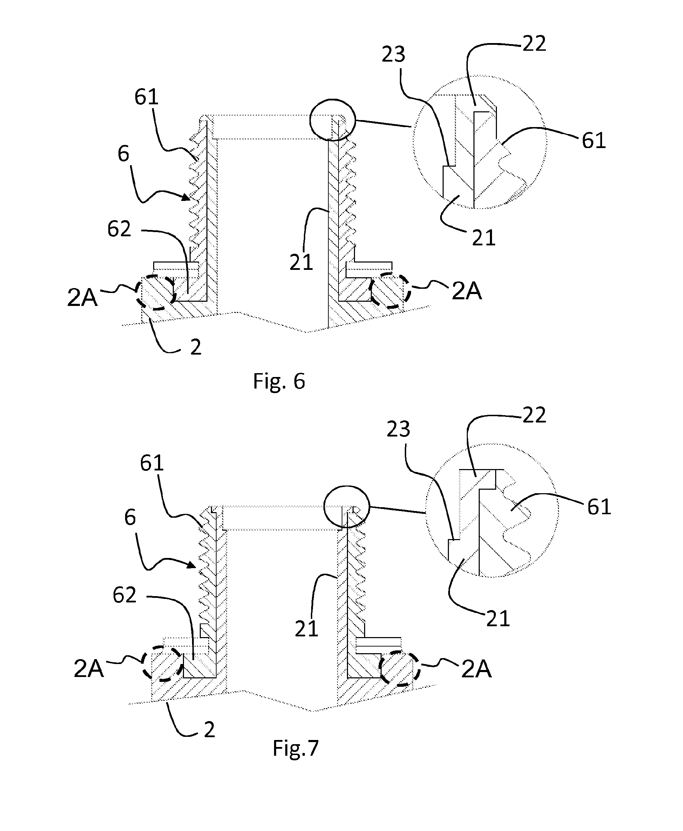

Referring back to the illustrated example, in Figs. 6 and 7, as well as in the general view of Fig. 5, threaded metal sleeve 6 comprises a first threaded portion 61 placed externally to plastic body 2, which in the thread area consists of a plastic tubular section 21 extending inside portion 61; metal sleeve 6 also comprises a second engagement portion 62 partly incorporated into plastic body 2 and fitted with anti-rotation means, which will be described further on.

In this regard, it should be pointed out that plastic body 2 and/or plastic tubular section 21 are manufactured by moulding the plastic material on metallic coupling element 6.

The process for manufacturing the flow meter according to the invention therefore comprises at least the steps of:
- using a metallic element for coupling the flow meter to a main duct C;
- manufacturing, by moulding or overmoulding a plastic material, at least one plastic tubular section 21 inside said metallic coupling element.

In the case of a metallic coupling element consisting of a threaded metal sleeve 6 and a plastic body manufactured as one piece, the method may also comprise the step of:
- using threaded metal sleeve 6 for coupling the flow meter to a main duct C;
- manufacturing, by moulding or overmoulding a plastic material, the hollow body of a flow meter and at least one plastic tubular section 21 inside said metallic coupling element.

In this manner, the inner walls of the tubular channel defined by the flow meter are wholly made of plastic.

As shown in the framed enlarged details of Figs. 6 and 7, plastic tubular section 21 may terminate flush with the free end of first portion 61, as in Fig. 7, or protrude beyond it, as in Fig. 6, thus fully or partly covering said end of first portion 61; in both cases, it has a plastic sealing edge 22 which ensures a perfect frontal seal between the flow meter and the duct(s) afferent thereto, such as main duct C.

More specifically, if an annular gasket 7A is used, plastic tubular section 21 (when the flow meter is mounted to main duct C) exerts axial compression onto said annular gasket 7A, thus ensuring a watertight seal and protecting the gasket from wear: for this purpose, in fact, annular gasket 7A exerts its sealing action under the axial compression generated by the metallic coupling element, being compressed between a step-like end edge 9C of pipe 9 of main duct C and plastic tubular section 21 itself; this prevents any elements or bodies from creeping on annular gasket 7A, which is beneficial for the life of the latter.

Preferably, plastic sealing edge 22 juts axially outwards from plastic tubular section 21 and/or, as in Fig. 6, it also projects radially outwards beyond first portion 61, so as to create a frontally abutting edge at least partly made of plastic.

In the enlarged detail of Fig. 6 it can also be seen that plastic sealing edge 22 juts radially outwards from plastic tubular section 21 and is then bent in a 'U' fashion against sleeve 6.

This solution ensures the additional advantage of preventing sleeve 6 from being pulled off in the event of an accidental failure.

For creating an edge 22 like the one shown in Fig. 6, moulding or overmoulding plastic tubular section 21 in or on metal sleeve 6 is extremely advantageous because of the undercut obtained when bending plastic edge 22 in a 'U' fashion against sleeve 6.

Said process or method according to the invention for manufacturing the flow meter may comprise the step of:
- manufacturing said sealing profile or edge 22 by moulding or overmoulding a plastic material.

As explained above, the tubular channel section in which the fluid to be measured by the flow meter flows consists solely of body 2, which comprises plastic tubular section 21 moulded in and/or on the fitting or threaded metal sleeve and terminating with a sealing edge 22, also made of plastic; it follows that, within the flow meter according to the present invention, the fluid flows through a tubular channel section wholly defined by perimetric walls whose inner surface, i.e. the surface facing the detection means, is wholly made of plastic.

This means that, even if the mating between metal sleeve 6 and plastic body 2 shows imperfections due, for example, to a different shrinkage rate of the two different materials, a proper seal will still be ensured because the tubular channel where the fluid flows is wholly made of plastic and preferably manufactured in one piece with body 2 (although by moulding or overmoulding plastic on metal) and is not therefore subject to the problems affecting the prior art.

In this regard, the tubular channel section within which the fluid flows through the flow meter is to be understood as having plastic walls, irrespective of the fact that there is a sleeve 6 wholly or partly surrounding said walls.

Another advantage brought about by these features is that plastic tubular section 21 can be very thin, in particular because the mechanical resistance to internal pressure is given thereto by metal sleeve 6 that embraces it.

Although the drawings show a flow meter 1 having one end thus designed (whereas the other end only has a simple thread 40 obtained on the plastic material of body 2), it is of course also conceivable that both such ends, or any other additional open or fitting ends of the flow meter are designed in this way.

Retaining reliefs 27 are also provided in body 2, which reliefs project inwards in the duct to define the space in which slider 3 is displaced.

Referring back to metal sleeve 6, it also has an engagement portion 62 partly incorporated into the plastic material of the body (by moulding or overmoulding plastic on metal), which engagement portion 62 is provided with anti-rotation means for preventing any mutual rotation between the metal sleeve and the plastic body; as can be seen, in accordance with the teachings of the present invention second portion 62 of the metal sleeve extends at least partly radially outwards, past the first portion.

More in particular, as will be explained in detail below, the anti-rotation means according to the present invention may comprise extensions or grooves extending at least partly radially outwards or inwards, starting from different diameters being preferably greater than those of the coupling means and/or of plastic tubular section 21; preferably, the anti-rotation means do not act directly upon thin areas of plastic tubular section 21; on the contrary, they preferably act upon engagement zones 2A of plastic body 2, in which the wall, body or plastic material is thicker.

Engagement zone 2A of body 2, adapted to cooperate with said second portion 62 in order to prevent any mutual rotation between plastic body 2 and metal sleeve 6, is different from that of plastic tubular section 21 not only in that it extends at least partly for longer radial distances from the centre of the tubular channel, but also because it has a thicker wall onto which the aforementioned tightening forces are discharged.

Moreover, plastic tubular section 21 that defines the walls of the tubular channel section within body 2 has preferably a smooth outer surface, i.e. the surface of the plastic tubular section that faces sleeve 6 has preferably no reliefs or grooves, so as to prevent plastic tubular section 21 and the sleeve to engage and rotate together, advantageously preventing any torsion stresses from being transferred from sleeve 6 to plastic tubular section 21, which can thus have a very thin wall.

Referring back to the example illustrated in the drawings, the anti-rotation means that prevent any mutual rotation between plastic body 2 and metal sleeve 6 extend up to diameters larger than the thread diameter, thereby providing the advantages described above.

In this solution, in fact, threaded portion 61 and engagement portion 62 of metal sleeve 6 extend radially up to different distances from the centre of rotation of ring nut 7 (or an equivalent element) screwed onto threaded section 61, engagement portion 62 being rotatably engaged with zones 2A of body 2.

It should be reminded that engagement portion 62 is at least partly incorporated into the plastic material of the body, namely into plastic engagement zones 2A, e.g. by using the production technique called moulding or overmoulding, per se known, wherein an insert made of another material (in this case metal sleeve 6) is placed into the mould for the plastic material, so that the insert will remain at least partly "buried" or incorporated into the plastic when the moulding process is over.

The anti-rotation effect is thus determined by the geometry of engagement portion 62, which has extensions or grooves that prevent any mutual rotation between sleeve 6 and body 2 because they extend along curves not matching the trajectories followed by a point rotating about the axis of the tubular channel, de facto creating mechanical interference that prevents the two parts from turning relative to each other.

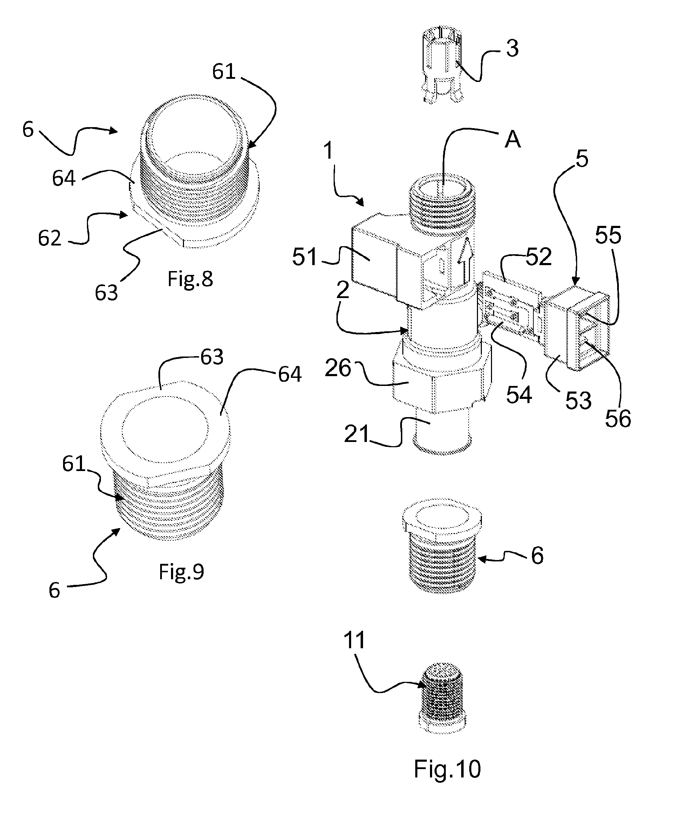

More in detail, the geometric profile shown in the example of Figs. 8 and 9, which provides the anti-rotation means used on engagement portion 62, comprises at least one flange with two elongated and bevelled ends 64, opposite to each other, and two opposite straight ends 63 forming two parallel flat surfaces.

In the specific example described herein, the curvilinear bevel of elongated ends 64 extends along a circumference whose centre is the axis of thread 61: Such a solution at least partly prevents stresses from arising in one point, to advantage of the strength of the mating between metal and plastic.

Those skilled in the art may then conceive further variations or changes without however departing from the teachings and protection scope of the present invention, which may consist of multiple flat surfaces and/or flanges having a different thickness, e.g. depending on the expected mechanical stresses.

Although the described geometry is not a complex one, it is however still possible to conceive different geometries, e.g. with profiles or surfaces having a cross, star, or polygonal shape, or the like, without departing from the protection scope of the present invention; it may interestingly be noted that, though simple, the geometry illustrated herein is extremely effective; in fact, the engagement portion lies on diameters greater than that of the thread and/or tubular section 21, while at the same time creating an effective anti-pull system that, thanks to the undercut between plastic body 2 and metal sleeve 6, prevents the metal sleeve from being accidentally pulled out from its seat in the plastic body.

It should also be mentioned that the preferable absence of any sharp corners in the geometric profile of the anti-rotation means advantageously allows to prevent any crack points from arising in the surrounding plastic material, since the forces are discharged evenly on the edge, not on a single point or a very small area (as is usually the case with sharp corners); this feature also proves to be extremely advantageous in the presence of relatively large dimensional tolerances caused by an imperfect mating between metal and plastic, as described above.

As far as the anti-rotation means are concerned, an additional advantageous feature should also be pointed out: they preferably and at least partly consist of a metal sleeve with no through holes or cavities in the radial direction, i.e. having no holes at least in first portion 61 (that surrounds or embraces plastic tubular section 21) where plastic can enter during the moulding process, thus de facto eliminating the problems of prior-art designs; cavities or holes may however be provided to advantage in said second portion 62, e.g. in the axial direction, where the thickness of the plastic wall of engagement zone 2A of body 2 is greater than that of plastic tubular section 21, and therefore more suited to absorbing stresses without suffering any damage.

The absence of holes in at least first portion 61, in fact, allows plastic tubular section 21 to be kept particularly thin, which is beneficial in terms of production costs; besides, plastic tubular section 21 can be extremely thin also because it is distinct from engagement zones 2A of body 2, thus being less subject to mechanical stresses.

As a matter of fact, by providing the anti-rotation means in the form of a solid body extending according to whatever geometry beyond the thread diameter and having no through holes at least in first portion 61, further advantages are also attained in addition to those already discussed above: for example, the production process (at least for the portion with no holes) turns out to be simpler, since no holes have to be filled in that portion; on the contrary, the plastic of body 2 settles more easily around the anti-rotation means (at least in engagement zones 2A), leading to a less critical production process wherein even an imperfect control of the various parameters will not translate into a structural defect capable of making the coupling significantly weaker.

In addition, the plastic material of body 2 in engagement zone 2A surrounding and incorporating engagement portion 62 of the metal sleeve is preferably shaped with a gripping profile 26, which in the illustrated case is hexagonal (but may also have different shapes), so as to allow an installer to use a suitable tool for engaging it, thus generating a reaction point onto which the torque applied when tightening the ring nut is discharged, thereby advantageously preventing said torque from being discharged through the plastic body onto the opposite end of the flow meter (when already attached to an afferent duct).

In this regard, it should be noted that, especially when used in wall-mounted boilers, during the installation procedure the flow meter is normally first coupled to the outlet or drain duct and then to the inlet or supply duct C; it follows that the flow meter is coupled to pipe 9 when it has already been locked in position with the drain duct, so that, if said gripping profile 26 were not present, the force exerted for coupling the meter to pipe 9 would be totally transferred to meter 1 and/or to the other devices of the user apparatus or boiler connected thereto, thus subjecting meter 1 to torsional stress.

It should also be pointed out that in the above example flow meter 1 is also equipped with a filter 11 (optional) arranged inside plastic tubular section 21, which filter 11 has a cylindrical body ending with a peripheral edge 111, visible in Fig. 3, which engages into a seat 23 defined by a reduced thickness of section 21 itself, for a better positioning and/or sealing effect; seat 23 also provides the function of preventing the filter, when the flow meter is operating, from moving from its position and/or penetrating or sliding too deeply in the body, thus becoming difficult to remove, e.g. for cleaning purposes.

Furthermore, production costs are decreased by the fact that transducer 5, which in this non-limiting example is a Reed transducer, as shown in Fig. 10, is housed in a casing 51 at least partly obtained in one piece with plastic body 2.

In brief, a Reed transducer is (in its simplest form) a reed switch or contact inserted in a glass envelope or the like filled with an inert gas, which switch changes state (open or closed) in the presence of a magnetic field like the one generated by magnet 31.

A Reed transducer is ideally applicable when the flow meter is a flow meter emitting a signal as soon as the flow rate of the fluid flowing through it reaches a predefined value.

Fig. 10 shows Reed contact 54 associated with printed circuit 52 housed in casing 51; casing 51 is closed by electric connector 53, which acts as a cover to protect printed circuit 52 from contact with liquids, dust or dirt; on electric connector 53 there are electric terminals 55, 56 connected to printed circuit 52.

Thus, with advantages in terms of production costs and/or simplicity, casing 51 of transducer 5 can advantageously be obtained during the same moulding process carried out for manufacturing body 2.

According to an additional advantageous feature, electric terminals 55, 56 are provided by printed circuit 52 itself, which is suitably shaped for this purpose, resulting in easier assembly steps and lower costs.

In the annexed drawings, flow meter 1 is shown as including a branching duct 35, which is nevertheless optional; it is however worth mentioning that this branching duct may not have walls entirely made of plastic material, although such a solution appears to be preferable in this case as well.

The type of flow meter described above is mainly, but not exclusively, used in wall-mounted boilers or household appliances, where it becomes a flow switch, i.e. a flow meter that emits a signal as soon as the flow rate of the fluid flowing therethrough reaches a predefined value; the inherent advantage of such a flow meter is that, as can be seen clearly in the drawings described above, it takes a very small space, since its dimensions are similar to those of the ducts with which it is in fluidic communication.

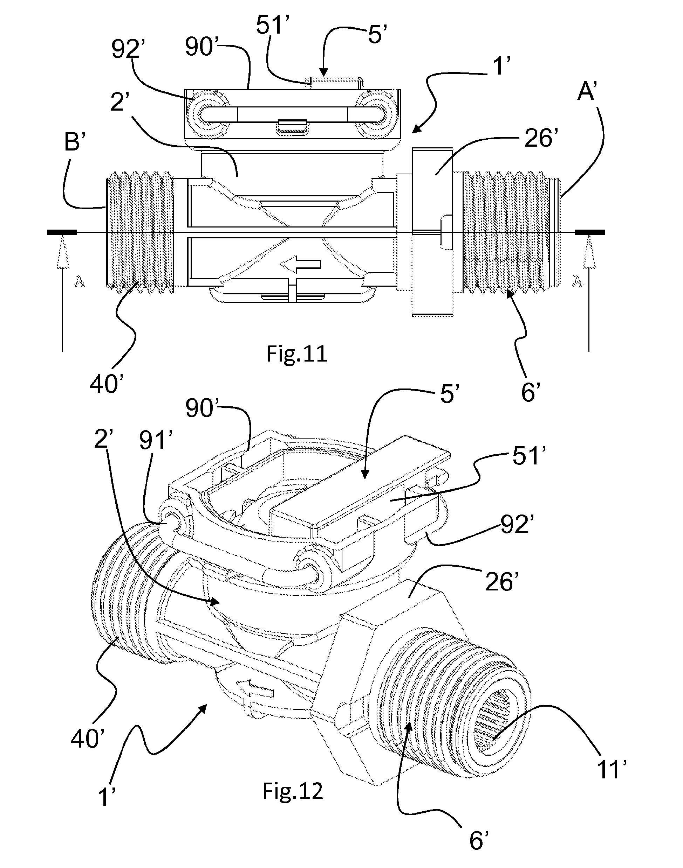

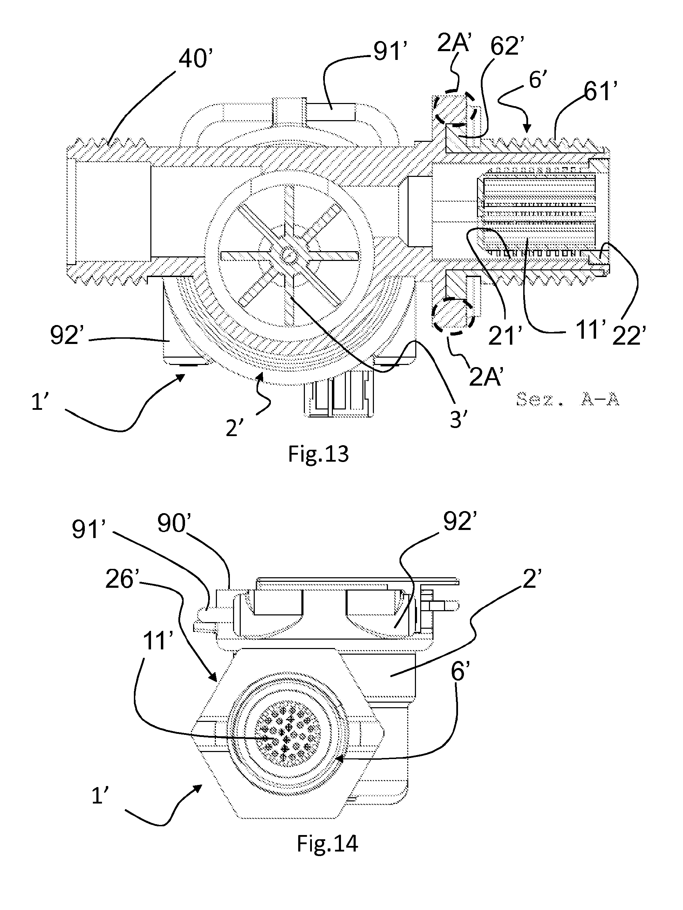

Figs. 11 to 14 schematically show a different type of flow meter 1' comprising, as a movable element, an impeller 3' which turns when hit by a fluid flow, thus measuring the physical quantities thereof in per se known manners, which will not be described any further; the same reference numerals, with the addition of an apostrophe ', designate the same parts of the previous example or parts having the same or an equivalent function and offering the same or analogous advantages.

In this case as well, the teachings of the present invention can be applied in a similar manner and with the same advantages stated above by using a metallic coupling element, provided in the form of a metal sleeve 6', for coupling meter 1' to at least one main duct carrying the fluid to be measured, and a plastic body 2' at least partly incorporating metal sleeve 6'.

As described above and in accordance with the teachings provided herein, also flow meter 1' comprises as a whole a hollow plastic body 2' and defines a tubular channel section extending from an inlet aperture to an outlet aperture and housing at least the detection means (e.g. impeller 3'), within which tubular channel section a fluid flows; as previously described, the tubular channel section has walls entirely made of plastic material.

A clear difference between this impeller flow meter 3' and slider flow meter 3 described above is the different shape and size of the two plastic bodies 2 and 2', since the latter must be shaped in a manner such as to house impeller 3'.

Still in accordance with the above description, it is conceivable that metal sleeve 6' has a first portion 61' fitted with coupling means adapted to couple metal sleeve 6' to at least one duct afferent to the meter, and a second engagement portion 62' partly incorporated into the plastic material of body 2' and fitted with anti-rotation means for preventing any mutual rotation between the metal sleeve and the plastic body, wherein the anti-rotation means are arranged at diameters which are larger than those of the coupling means; in general, in fact, the same teachings provided above in relation to slider flow meter 1 are also applied to this impeller-type flow meter 1'.

Figs. 11 to 14 show the particular shape of body 2', which is at least partly cylindrical or has at least one cylindrical seat, with the axis of the generatrix of the cylinder or cylindrical seat substantially perpendicular to the direction of flow in body 2', for the purpose of properly orienting impeller 3'; said impeller 3' comprises or is fitted with an excitation element, preferably comprising at least one permanent magnet or being made of a magnetic material, such as magnetized plastoferrite.

Hollow body 2' is closed, preferably at the portion that houses impeller 3', by a removable plug 90', so that impeller 3' can be placed into its seat within hollow body 2' during the assembly stage.

In the illustrated example, removable plug 90' is locked in position by retaining means shown in an exemplifying form as a U-shaped pin 91' inserted in matching seats 92' provided on both body 2' and removable plug 90', thus retaining the latter in position.

Transducer 5' is preferably positioned on or integrated in removable plug 90', which in particular comprises at least a portion of casing 51' of transducer 5' ; just like the previous example, the seat may accommodate the printed circuit and be closed by a cover comprising the electric terminals, or alternatively the electric connector may be of a different type, with the same or similar advantages and/or characteristics of the previous example.

In both embodiments, the wall thickness of plastic tubular section 21' is smaller than the wall thickness of the portion of plastic body 2' associated with the anti-rotation means.

In a variant not shown in the drawings, the flow meter may be of the axial turbine type, in particular having a turbine so sized as to be inserted axially into the hydraulic duct of device 1 according to the invention, preferably after body 2, 2' has been moulded over metallic element 6, 6'.

In the present description, reference has always been made to a generic plastic material, which must be mouldable and consists preferably of a suitable thermoplastic material.

It should also be pointed out that the plastic body may possibly be made of multiple materials moulded or welded together, or at least partly coated or treated with a surface treatment, e.g. for protecting the material against the chemical etching exerted by the fluid circulating in the flow meter: in this respect, the tubular channel section in the flow meter where the fluid flows is to be understood as defined by walls made of plastic material, regardless of whether the latter are obtained from multiple parts moulded or welded together, coated or subjected to surface treatments.

Based on the above, those skilled in the art will be able to set up many other variants, without however departing from the teachings and objects of the present invention.

Although the teachings of the present invention have been described herein with particular reference to the flow meter field, they may of course be effortlessly implemented by those skilled in the art in different devices or sensors as well, which will still fall within the scope of the present invention.

In general, said devices may be any devices having a hollow plastic body carrying a fluid for which parameters and/or physical quantities are to be measured, and comprising at least one metallic coupling element for being connected to at least one afferent duct.

Some examples of such devices are (without limitation) temperature, pressure and velocity sensors or meters, optical sensors, dirt or turbidity sensors, conductivity sensors, fluid quality sensors, or the like.

## Claims

1. Detection device (1,1') for detecting at least one physical quantity of a fluid, of the type comprising at least one hollow plastic body (2,2') housing at least one detection means (3,3') of a sensor of said physical quantity, wherein the detection device (1,1') is provided with at least one inlet aperture and one outlet aperture for said fluid, and at least one metallic coupling element (6,6') to be coupled to at least one duct (C) afferent to the detection device (1,1'), and wherein the hollow plastic body (2,2') is associated with said metallic coupling element (6,6'), and wherein a segment of a tubular channel is defined within said detection device (1,1') in which fluid flows between the inlet aperture and the outlet aperture, the detection means (3,3') being housed within said segment of the tubular channel,
**characterized in that**
the walls of the segment of the tubular channel are entirely made of plastic material.

2. Detection device (1,1') according to claim 1, wherein at least one wall of said segment of tubular channel is at least partly associated with said at least one metallic element (6,6') by moulding the plastic material of said body (2,2').

3. Detection device (1,1') according to claim 1 or 2, wherein said metallic coupling element (6,6') comprises a first portion (61, 61') provided with coupling means adapted to couple said metallic coupling element (6,6') to said at least one duct (C) afferent to said device and/or comprises a second engagement portion (62,62') for engaging the metallic coupling element (6,6') with said hollow plastic body (2,2'), and wherein said second engagement portion (62,62') is preferably at least partly incorporated into the plastic body (2,2') .

4. Detection device (1,1') according to claim 1 or 2 or 3, wherein the plastic body (2,2') has a plastic sealing edge (22,22'), preferably associated with a plastic tubular section (21,21'), which extends at least into the first portion (61,61') of the metallic coupling element (6,6').

5. Detection device (1,1') according to claim 4, wherein said plastic tubular section (21,21') ends at or near the free end of the first portion (61,61') of the metallic coupling element (6,6'), and preferably it extends radially and/or is adapted to provide at least one front sealing edge (22,22') made of plastic.

6. Detection device (1,1') according to one or more of the preceding claims, wherein said second portion (62,62') for engaging said metal coupling element (6,6') is provided with anti-rotation means adapted to prevent the reciprocal rotation of said metal coupling element (6,6') and said body (2,2') at at least one engagement zone (2A, 2A') of said body (2,2') adapted to cooperate with said anti-rotation means, and wherein the wall thickness of said plastic tubular section (21,21') is preferably smaller than the wall thickness of the engagement zone (2A, 2A') of the plastic body (2,2').

7. Detection device (1,1') according to claim 6, wherein said second engagement portion (62,62') extends at least partly radially outwards beyond the first portion (61,61').

8. Detection device (1,1') according to claim 6 or 7, wherein the anti-rotation means are provided at diameters larger than those corresponding to the coupling means, with reference to the centre of the duct defined within the flow meter (1,1').

9. Detection device (1,1') according to claim 7 or 8, wherein the anti-rotation means comprise extensions or grooves extending at least partly radially outwards or inwards to the body, starting from diameters larger than those corresponding to the coupling means and/or to said first portion (61,61').

10. Detection device (1,1') according to one or more of the preceding claims, wherein said first portion (61,61') comprises hydraulic and/or mechanic coupling means, in particular a thread, in order to allow for a screw connection to a ring nut (7) and/or to a threaded duct (C) and/or for a ring nut (7), and/or alternatively said first portion comprises a quick plug-in or bayonet type coupling profile.

11. Detection device (1,1') according to one ore more of the preceding claims, wherein said metal coupling element (6,6') is at least partly incorporated into said body (2,2') through moulding or overmoulding of the body (2,92) over and/or into the metal coupling element (6, 6').

12. Detection device (1,1') according to one or more of the preceding claims, wherein, at the engagement zone (2A, 2A'), said body (2,2') is shaped with a gripping profile (26), e.g. a hexagonal profile or the like, which provides a tightening or reaction point for applying a force or a torque when coupling said meter (1,10) to at least one duct (C) afferent to said device (1,1').

13. Detection device (1,1') according to one ore more of the preceding claims, wherein said plastic tubular section (21) comprises a housing seat (23) defined by a reduced thickness thereof, and wherein said meter (1,10) also comprises a filter (11) housed in said plastic tubular section (21), which filter (11) has a cylindrical body ending with a peripheral edge (111), which peripheral edge (111) is housed in said seat (23).

14. Detection device (1,1') according to one or more of the preceding claims, **characterized by** being a flow switch or a flow meter (1), wherein said detection means (3,3') is an element which can be moved under the action of the fluid inside the body (2), such as a linearly movable slider (3) or an angularly movable impeller (3'), in particular of the type comprising at least one excitation element or one magnet (31), the movement of which is detected by a sensor or a transducer (5,5') arranged outside the body (2,2'), e.g. a magnetic, Reed or Hall sensor or transducer.

15. Method for manufacturing a detection device (1,1') according to one or more of the preceding claims, comprising at least two of the following steps:
- using a metallic element (6,6') for coupling the detection device (1,1') to an afferent duct (C),
- manufacturing, by moulding or overmoulding a plastic material, at least one plastic tubular section (21,21') inside said metallic coupling element (6,6'), said plastic tubular section (21,21') being a part of a tubular channel in which the fluid to be measured by the detection device (l,l') flows,
- manufacturing, by moulding or overmoulding a plastic material, at least one sealing profile or edge (22,22') at at least one free end segment of at least one metallic coupling element (6,6').
